# EUROPEAN PATENT APPLICATION

(11) **EP 4 265 488 A1**
(43) Date of publication of application: **25.10.2023**
(21) Application number: 20965374.0
(22) Date of filing: 15.12.2020
(51) Int. Cl.: B60T 7/04, B60L 7/10, B60L 7/26

(54) **BRAKE CONTROL METHOD, BRAKE CONTROL DEVICE AND ELECTRIC VEHICLE**

(71) Applicant: Zhejiang Smart Intelligence Technology Co., Ltd., Ningbo, Zhejiang 315336 (CN)
(72) Inventor: LI, Weiqiang, Hangzhou Bay New District Ningbo, Zhejiang 315336 (CN); DU, Hanbin, Hangzhou Bay New District Ningbo, Zhejiang 315336 (CN); XU, Hua, Hangzhou Bay New District Ningbo, Zhejiang 315336 (CN); HAN, Mingjia, Hangzhou Bay New District Ningbo, Zhejiang 315336 (CN); YANG, Mingyu, Hangzhou Bay New District Ningbo, Zhejiang 315336 (CN)
(74) Representative: Zaboliene, Reda
(86) International application number: PCT/CN2020/136393
(87) International publication number: WO 2022/126356

(57) **Abstract**

The present application provides a brake control method, a brake control device and an electric vehicle, the brake control method being applied to the brake control device and comprising : obtaining, in a single pedal mode, a voltage signal and a corresponding voltage variation characteristic of an accelerator pedal, and calculating a brake torque requirement based on the voltage signal and the corresponding voltage variation characteristic; performing first torque arbitration and determining a target electric brake torque according to the brake torque requirement; and applying braking in a corresponding braking mode according to the relationship between the target electric brake torque and an electric motor torque limit and/or according to an electric motor condition. The present application makes it possible to apply braking in a corresponding braking mode according to the relationship between a target electric brake torque and an electric motor torque limit and/or according to an electric motor condition, and provides a new braking compensation method in cases where the electric motor torque limit is lower than the target electric braking torque, and/or in abnormal conditions such as when having a full battery, during overheating protection, electric motor failure, etc., to ensure safe braking on a road.

## Description

### TECHNICAL FIELD

The present application belongs to the technical field of vehicle brake control, and in particular relates to a brake control method, a brake control device and an electric vehicle.

### BACKGROUND TECHNIQUE

With the increasingly prominent world energy crisis and environmental protection issues, countries around the world are paying more and more attention to new energy vehicles. In recent years, new energy vehicles have been vigorously promoted and used in my country, especially electric vehicles, which are characterized by the motor as their entire power source. In addition, the single-pedal function is a new function that has gradually emerged in the past two years. The acceleration and deceleration of the whole vehicle can be controlled by one accelerator pedal. Especially in urban conditions, this function can reduce the driver's frequent switching between the brake pedal and the accelerator pedal, and can achieve energy recovery at all speed segments.

### TECHNICAL PROBLEM

Current electric models, including Tesla model3\ Buick Micro Blue and Geely Geometric A, implement single pedal function when the battery is fully charged, motor overheating protection, motor failure and other abnormal states, the vehicle speed reduction cannot be consistent with the normal operating state, lower than the driver's expectations; The driver anticipates that the vehicle has the electric braking capability, but in actually the electric braking cannot be implemented due to the fault, and other braking operations can be implemented after the driver responds. In a very short period of time, it is easy to cause adverse consequences.

### TECHNICAL SOLUTIONS

In view of this, the present application provides a brake control method, a brake control device and an electric vehicle.

The brake control method provided by the present application, applied to a brake control device, includes: acquiring voltage signal of an accelerator pedal and the corresponding voltage change characteristic in a single-pedal mode , and calculating braking torque requirement according to the voltage signal and the corresponding voltage change characteristic; performing a first torque arbitration and determining a target electric braking torque based on the braking torque requirement; according to the relation between the target electric braking torque and a motor torque limit value and/or motor state , adopting correspondent brake mode to make brake.

According to an embodiment of the present application, the step of according to the relation between the target electric braking torque and the motor torque limit value and/or the motor state , adopting correspondent brake mode to make brake, includes: if the motor is in a normal working state and the target electric braking torque does not exceed the motor torque limit value, adopting the electric braking mode to make brake; if the motor is in a normal working state and the target electric braking torque exceeds the motor torque limit value, adopting the combination of electric braking and hydraulic-braking-compensation to make brake.

According to an embodiment of the present application, the step of adopting the combination of electric braking and hydraulic-braking-compensation to make brake, includes: applying an electric braking to a portion of the target electric braking torque that does not exceed the motor torque limit value; applying hydraulic-braking-compensation to a portion of the target electric braking torque that exceeds the motor torque limit value.

According to an embodiment of the present application, the step of according to the relation between the target electric braking torque and the motor torque limit value and/or the motor state , adopting correspondent brake mode to make brake, includes: if the motor is in a first abnormal operating state , exiting the single-pedal mode, and adopting hydraulic-braking-compensation, and displaying a first prompt message , wherein the first abnormal operating state comprises at least one of a mechanical fault, a communication fault, and an electric braking fault caused by battery overheat protection ; if the motor is in a second abnormal working state, adopting the combination of electric braking and hydraulic-braking-compensation to make brake, wherein the second abnormal working state is an electric braking fault state caused by battery full power.

According to an embodiment of the present application, before the step of performing the first torque arbitration and determining the target electric braking torque based on the braking torque requirement , includes: evaluating the energy recovery capability of the whole vehicle according to the braking torque requirement; according to the evaluation result of the energy recovery capability, performing corresponding operation.

According to an embodiment of the present application, the step of according to the evaluation result of the energy recovery capability, performing corresponding operation, includes: executing the step of performing first torque arbitration and determining the target electric braking torque based on the braking torque requirement, if the evaluation result of the energy recovery capability indicates that the energy recovery capability meets a preset condition; exiting the single-pedal mode, and adopting hydraulic-braking-compensation, and displaying a second prompt information, if the evaluation result of the energy recovery capability is that the energy recovery capability does not meet the preset condition.

According to an embodiment of the present application, the brake control method includes: during braking in the single-pedal mode, if acquiring the voltage signal of the brake pedal, acquiring the corresponding target hydraulic braking torque according to the voltage signal of the brake pedal, and entering a cooperative energy recovery mode , wherein in the cooperative energy recovery mode, the target braking torque is the sum of the target electric braking torque and the target hydraulic braking torque; converting the target hydraulic braking torque in the target braking torque to a corresponding target electric braking torque; if the target braking torque is less than or equal to the motor torque limit value, applying an electric braking; if the target braking torque is greater than the motor torque limit value, adopting the combination of electric braking and hydraulic-braking-compensation to make brake.

According to an embodiment of the present application, the brake control method further includes: during braking in the single-pedal mode, if obtaining a trigger response signal of an electronic stability control system, exiting the single-pedal mode, entering the electronic-stability-control-system-working mode, and displaying a third prompt information.

According to an embodiment of the present application, after the step of according to the relation between the target electric braking torque and the motor torque limit value and/or the motor state, adopting correspondent brake mode to make brake, the brake control method includes: acquiring the speed of the whole vehicle; and if the speed is lower than a preset value and a power-off signal of the whole vehicle is acquired, triggering an electronic-parking mode.

According to an embodiment of the present application, the step of the step of adopting hydraulic-braking-compensation, includes: performing a second torque arbitration and determining a target hydraulic braking torque based on the braking torque requirement; adopting hydraulic-braking-compensation based on the target hydraulic braking torque.

The brake control device provided by the present application includes a battery energy control module, a motor control module, and a whole vehicle dynamic domain manager; the battery energy control module respectively connected with the motor control module and the whole vehicle dynamic domain manager, and configured to acquire voltage signal of an accelerator pedal and the corresponding voltage change characteristic in a single-pedal mode, and after calculate braking torque requirement according to the voltage signal and the corresponding voltage change characteristic, perform a first torque arbitration and determine a target electric braking torque according to the braking torque requirement, and output the first control signal according to the relation between the target electric braking torque and a motor torque limit value and/or motor state; the motor control module and/or the whole vehicle dynamic domain manager receiving the first control signal and performing braking operation in a corresponding braking mode according to the first control signal.

According to an embodiment of the present application, the brake control device further includes a brake assist module; the battery energy control module also configured to evaluate the energy recovery capability of the whole vehicle according to the braking torque requirement, and output an evaluation result; the whole vehicle dynamic domain manager receiving the evaluation result, performing a second torque arbitration and determining a target hydraulic braking torque according to the braking torque requirement, when the energy recovery capability does not meet a preset condition and/or the motor is in a first abnormal operating state, and performing hydraulic-braking-compensation operation or outputting a second control signal according to the target hydraulic braking torque; the brake assist module connected to the whole vehicle dynamic domain manager, and receiving the second control signal, and performing hydraulic-braking-compensation operation according to the second control signal.

The electric vehicle provided by the present application includes the above-mentioned brake control device.

### BENEFICIAL EFFECT

The brake control method, the brake control device and the electric vehicle provided by the present application can use the corresponding braking method to perform braking according to the relationship between the target electric braking torque and the motor torque limit value, and/or the state of the motor. When the torque limit is lower than the target braking torque, and/or abnormal conditions such as battery full power, overheating protection, motor failure, etc., a new braking compensation method is provided to ensure the safety of driving braking.

### DESCRIPTION OF DRAWINGS

FIG. 1 is a schematic flowchart of a brake control method provided in embodiment 1 of the present application.
FIG. 2 is a schematic flowchart of a specific flow of the brake control method provided in embodiment 2 of the present application.
FIG. 3 is a schematic structural diagram of a brake control device provided in embodiment 3 of the present application.

### EMBODIMENTS OF THE PRESENT APPLICATION

The embodiments of the present application are described below by specific examples, and those skilled in the art can easily understand other advantages and effects of the present application from the contents disclosed in this specification.

Unless otherwise defined, all technical and scientific terms used in this application have the same meaning as commonly understood by one of ordinary skill in the technical field to which this application belongs. The terms used in this application are for the purpose of describing specific embodiments only, and are not intended to limit the application. As used herein, "and/or" includes any and all combinations of one or more of the associated listed items.

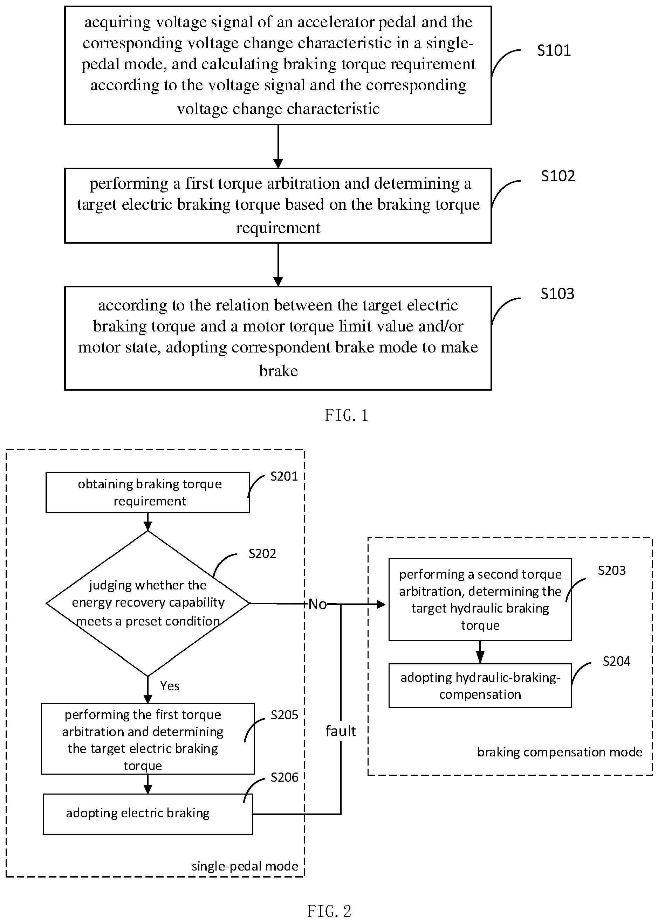

FIG. 1 is a schematic flowchart of a brake control method provided in Embodiment 1 of the present application. As shown in FIG. 1 , the brake control method of the present application may include the following steps:

Step S101: acquiring voltage signal of an accelerator pedal and the corresponding voltage change characteristic in a single-pedal mode, and calculating braking torque requirement according to the voltage signal and the corresponding voltage change characteristic;

Among them, the single-pedal mode refers to a mode in which the vehicle is decelerated by releasing the accelerator pedal. During the deceleration process, the motor performs energy recovery and converts kinetic energy into electrical energy for storage.

Specifically, the sensor acquires the accelerator pedal opening, and converts the accelerator pedal opening into an voltage signal of the accelerator pedal and transmits it to the battery energy control module (BECM) through the CAN bus, and the battery energy control module (BECM) obtains the corresponding voltage change characteristics according to the voltage signal of the accelerator pedal, that is, the voltage value changes with time, and then calculates the braking torque requirement according to the voltage signal and the corresponding voltage change characteristics through the experimental data.

Step S 102: performing a first torque arbitration and determining a target electric braking torque based on the braking torque requirement;

Specifically, the first torque arbitration is implemented by the battery energy control module (BECM), which determines the final target electric braking torque by comprehensively considering the braking torque requirement and other torque requirements or losses other than the braking torque requirement, and sends the target electric braking torque to the motor control module (GEM/IEM) for evaluation.

Step S 103: according to the relation between the target electric braking torque and a motor torque limit value and/or motor state, adopting correspondent brake mode to make brake.

In one embodiment, step S103 includes:

If the motor is in a normal working state and the target electric braking torque does not exceed the motor torque limit value, adopting the electric braking mode to make brake;

If the motor is in a normal working state and the target electric braking torque exceeds the motor torque limit value, adopting the combination of electric braking and hydraulic-braking-compensation to make brake.

Wherein, adopting the combination of electric braking and hydraulic-braking-compensation to make brake include:

applying an electric braking to a portion of the target electric braking torque that does not exceed the motor torque limit value;

applying hydraulic-braking-compensation to a portion of the target electric braking torque that exceeds the motor torque limit value.

Specifically, the motor control module (GEM/IEM) obtains the motor state and evaluates whether the motor's braking capacity meets the target electric braking torque requirement. When the motor is in a normal working state, if the target electric braking torque does not exceed the motor torque limit value, it is considered that the motor's braking capacity meets the target electric braking torque requirement. The evaluation results are fed back to the battery energy control module (BECM), and the target electric braking torque is implemented. If the target electric braking torque exceeds the motor torque limit value, it is considered that the braking capability of the motor does not meet the target electric braking torque requirement, and the evaluation results are fed back to the battery energy control module (BECM). The battery energy control module (BECM) then sends the part of the target electric braking torque exceeding the motor torque limit value to the whole vehicle dynamic domain manager (VDDM). The whole vehicle dynamic domain manager (VDDM) converts the electric braking torque exceeding the motor torque limit into hydraulic braking torque, and implements the hydraulic-braking-compensation operation according to the converted hydraulic braking torque control brake assist module (BBM), or directly implements the hydraulic-braking-compensation operation by the whole vehicle dynamic domain manager (VDDM). Wherein, the motor torque limit value is the upper limit of the electric braking torque that can be provided by the motor control module (GEM/IEM) according to the motor state and battery state.

In other embodiments, step S103 further includes:

if the motor is in a first abnormal operating state, exiting the single-pedal mode, and adopting hydraulic-braking-compensation, and displaying a first prompt message, wherein the first abnormal operating state comprises at least one of a mechanical fault, a communication fault, and an electric braking fault caused by battery overheat protection; if the motor is in a second abnormal working state, adopting the combination of electric braking and hydraulic-braking-compensation to make brake, wherein the second abnormal working state is an electric braking fault state caused by battery full power.

The step of adopting hydraulic-braking-compensation includes: performing a second torque arbitration and determining a target hydraulic braking torque based on the braking torque requirement; adopting hydraulic-braking-compensation based on the target hydraulic braking torque.

Specifically, before or during electric braking, if the battery energy control module (BECM) receives the first abnormal working state information of the motor from the motor control module (GEM/IEM), it will exit the single-pedal mode and enter the braking compensation mode. The battery energy control module (BECM) re-sends the braking demand to the whole vehicle dynamic domain manager (VDDM). The whole vehicle dynamic domain manager (VDDM) implements the second torque arbitration on the braking torque requirement to determine the target hydraulic braking torque, and controls the brake power module (BBM) to implement the hydraulic-braking-compensation operation according to the target hydraulic braking torque. Or the whole vehicle dynamic domain manager (VDDM) directly implements the hydraulic-braking-compensation operation according to the target hydraulic brake torque.

Optionally, after step S103, the method includes: acquiring the speed of the whole vehicle; and if the speed is lower than a preset value and a power-off signal of the whole vehicle is acquired, triggering an electronic-parking mode. Optimally, the preset value of the vehicle speed is 1 km/h.

It is worth mentioning that during the braking process in the single-pedal mode, if acquiring the voltage signal of the brake pedal, acquiring the corresponding target hydraulic braking torque according to the voltage signal of the brake pedal, and entering a cooperative energy recovery mode, wherein in the cooperative energy recovery mode, the target braking torque is the sum of the target electric braking torque and the target hydraulic braking torque; converting the target hydraulic braking torque in the target braking torque to a corresponding target electric braking torque; if the target braking torque is less than or equal to the motor torque limit value, applying an electric braking; if the target braking torque is greater than the motor torque limit value, adopting the combination of electric braking and hydraulic-braking-compensation to make brake, to meet the driver's braking requirement.

According to the braking control method provided in embodiment 1 of this application, firstly, the braking torque requirement is calculated according to the voltage signal and the corresponding voltage change characteristics. Then, according to the braking torque requirement, the first torque arbitration is carried out and the target electric braking torque is determined. Then, according to the relationship between the target electric braking torque and the motor torque limit value, and/or the motor state, the corresponding braking mode is adopted for braking. A new braking compensation method is provided for the motor torque limit value lower than the target braking torque, and/or the motor fault caused by full battery, overheating protection and other abnormal conditions, which can effectively ensure the braking safety in running.

FIG. 2 is a schematic flowchart of a specific flow of the brake control method provided in embodiment 2 of the present application. As shown in FIG. 2 , the brake control method of the present application may include the following steps:
Step S201: obtaining braking torque requirement;
Step S202: judging whether the energy recovery capability meets a preset condition;

If the energy recovery capability does not meet the preset condition, exit the single-pedal mode, and enter the step S203 of the braking compensation mode: performing a second torque arbitration, determining the target hydraulic braking torque; step S204: adopting hydraulic-braking-compensation;

If the energy recovery capability meets the preset condition, the process goes to step S205: performing the first torque arbitration and determining the target electric braking torque;
Step S206: adopting electric braking;

If a fault occurs in the process of implementing the electric braking, exiting the single-pedal mode and enter the step S203 of the braking compensation mode: performing the second torque arbitration, determining the target hydraulic braking torque; step S204: adopting hydraulic-braking-compensation; the failure conditions include at least one of: a mechanical fault, a communication fault, and an electric braking fault caused by battery overheat protection.

Specifically, in step S202, the energy recovery capability does not meet the preset condition including: the battery energy control module (BECM) operating abnormal or unable to participate in energy recovery, battery overheating protection resulting in failure to implement electric braking, motor mechanical and/or communication failure, etc.

Further, if the battery energy control module (BECM) evaluates that the energy recovery capability does not meet the preset condition, it exits the single-pedal mode and enters the step S203 of the braking compensation mode: the second torque arbitration, determining the target hydraulic braking torque; step S204: implement hydraulic-braking-compensation; specifically, steps S203 and S204 include: the battery energy control module (BECM) sends the braking torque requirement to the whole vehicle dynamic domain manager (VDDM), which implements the second torque arbitration on the braking torque requirement and controls the brake assist module (BBM) to implement the hydraulic-brake-compensation operation according to the second torque arbitration result. Or the whole vehicle dynamic domain manager (VDDM) directly implements the hydraulic-brake-compensation operation according to the second torque arbitration result. The whole vehicle dynamic domain manager (VDDM) determines the target hydraulic braking torque by considering braking torque requirements and other torque requirements or losses besides braking torque requirements.

Preferably, if the energy recovery capability does not meet the preset condition, second prompt information is displayed.

In addition, step S201 may refer to step S101, and step S205 may refer to step S102, which will not be repeated here.

It is worth mentioning that during the braking process in the single-pedal mode, if the battery energy control module (BECM) obtains the trigger response signal of the electronic stability control system (ESC), it will exit the single-pedal mode and enter the electronic-stability-control-system-(ESC) working mode, and display the third prompt information.

The braking control method provided in embodiment 2 of this application evaluates the energy recovery capability before the implementation of electric braking, and continuously evaluates the state of the motor during the implementation of electric braking. In view of the abnormal state such as the energy recovery ability does not meet the preset condition, battery overheating protection and motor failure, a new braking compensation method is provided to fully ensure the braking safety of the running vehicle.

It is worth mentioning that the first prompt, the second prompt and the third prompt in the embodiment provided in this application include the prompt for exiting the single-pedal mode and the prompt for the specific reason for exiting the single-pedal mode, which are displayed through the human-computer interactive interface (HMI), including text display and/or voice reminder.

For example, the first prompt is "communication failure occurred in the motor during the electric braking process, the single-pedal mode has been withdrawn and automatically enters the brake compensation mode"; the second prompt is "because the battery is in full charge, the energy recovery capability does not meet the preset conditions, the single-pedal mode has been quit and automatically enters the brake compensation mode"; the third prompt is "the vehicle is in skid state, has exited the single-pedal mode and automatically entered the electronic Stability Control system (ESC) mode".

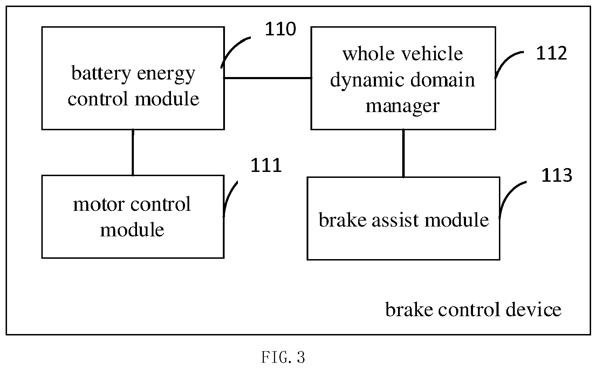

FIG. 3 is a schematic diagram of the brake control device provided in embodiment 3 of this application. As shown in FIG. 3, the brake control device of the present application includes: a battery energy control module 110, a motor control module 111, a whole vehicle dynamic domain manager 112 and a brake assist module 113. Among them, the battery energy control module 110 is connected to the motor control module 111 and the whole vehicle dynamic domain manager 112, and the whole vehicle dynamic domain manager 112 is connected to the brake assist module 113.

Specifically, the battery energy control module 110 is used to obtain the voltage signal of the accelerator pedal and the corresponding voltage change characteristics in the single-pedal mode, and after calculate braking torque requirement according to the voltage signal and the corresponding voltage change characteristic, perform the first torque arbitration and determine the target electric braking torque according to the braking torque requirement, and output the first control signal according to the relation between the target electric braking torque and a motor torque limit value and/or motor state. The motor control module 111 and/or the whole vehicle dynamic domain manager 112 receiving the first control signal and performing braking operation in a corresponding braking mode according to the first control signal. Among them, the steps of braking operation in the corresponding braking mode according to the first control signal are referred to embodiment 1, which will not be described here.

In one embodiment, the battery energy control module 110 is also configured to evaluate the energy recovery capability of the whole vehicle according to the braking torque requirement and output the evaluation result. The whole vehicle dynamic domain manager 112 receives the evaluation result. When the energy recovery capability does not meet the preset conditions and/or the motor is in the first abnormal operating state, the second torque arbitration is performed according to the braking torque requirement and the target hydraulic braking torque is determined. The hydraulic-braking-compensation operation is implemented according to the target hydraulic braking torque or the second control signal is output; the braking power module 113 is connected to the whole vehicle dynamic domain manager 112, receives the second control signal, and implements the hydraulic-braking-compensation operation according to the second control signal. Among them, the first abnormal working state includes mechanical failure, communication failure, electric braking failure caused by battery overheat protection at least one state.

It is worth mentioning that this application also provides an electric vehicle including the brake control device mentioned above.

The technical features of the above embodiments can be combined at will. For the sake of concise description, all possible combinations of the technical features in the above embodiments are not described. However, as long as there is no contradiction in the combination of these technical features, they should be considered to be the scope of this specification.

For purposes of this article, the term "includes," "comprises," or any other variation thereof is intended to cover non-exclusive inclusion in addition to those elements listed, and may also include other elements not expressly listed.

The above are only better embodiments of the application and are not intended to restrict the application in any way. Although the application has been disclosed as above in better embodiments, they are not intended to restrict the application. Any technical person familiar with the profession, within the scope of the technical scheme of the application, any simple modification, equivalent change and modification of the above embodiments in accordance with the technical substance of this application shall still fall within the scope of this application technical scheme if some changes or modifications are made to the above embodiments by using the technical content disclosed above as equivalent variations.

### INDUSTRIAL APPLICABILITY

The brake control method, the brake control device and the electric vehicle provided by the present application can use the corresponding braking method to perform braking according to the relationship between the target electric braking torque and the motor torque limit value, and/or the state of the motor. When the torque limit is lower than the target braking torque, and/or abnormal conditions such as battery full power, overheating protection, motor failure, etc., a new braking compensation method is provided to ensure the safety of driving braking.

## Claims

1. A brake control method, it is **characterized in that**, the brake control method is applied to a brake control device and comprises:
acquiring voltage signal of an accelerator pedal and the corresponding voltage change characteristic in a single-pedal mode, and calculating braking torque requirement according to the voltage signal and the corresponding voltage change characteristic;
performing a first torque arbitration and determining a target electric braking torque based on the braking torque requirement;
according to the relation between the target electric braking torque and a motor torque limit value and/or motor state, adopting correspondent brake mode to make brake.

2. The brake control method according to claim **1,** it is **characterized in that**, the step of according to the relation between the target electric braking torque and the motor torque limit value and/or the motor state, adopting correspondent brake mode to make brake, comprises:
if the motor is in a normal working state and the target electric braking torque does not exceed the motor torque limit value, adopting the electric braking mode to make brake;
if the motor is in a normal working state and the target electric braking torque exceeds the motor torque limit value, adopting the combination of electric braking and hydraulic-braking-compensation to make brake.

3. The brake control method according to claim **2,** it is **characterized in that**, the step of adopting the combination of electric braking and hydraulic-braking-compensation to make brake, comprises:
applying an electric braking to a portion of the target electric braking torque that does not exceed the motor torque limit value;
applying hydraulic-braking-compensation to a portion of the target electric braking torque that exceeds the motor torque limit value.

4. The brake control method according to claim **1,** it is **characterized in that**, the step of according to the relation between the target electric braking torque and the motor torque limit value and/or the motor state, adopting correspondent brake mode to make brake, comprises:
if the motor is in a first abnormal operating state, exiting the single-pedal mode, and adopting hydraulic-braking-compensation, and displaying a first prompt message, wherein the first abnormal operating state comprises at least one of a mechanical fault, a communication fault, and an electric braking fault caused by battery overheat protection;
if the motor is in a second abnormal working state, adopting the combination of electric braking and hydraulic-braking-compensation to make brake, wherein the second abnormal working state is an electric braking fault state caused by battery full power.

5. The brake control method according to claim **1,** it is **characterized in that**, before the step of performing the first torque arbitration and determining the target electric braking torque based on the braking torque requirement, comprises:
evaluating the energy recovery capability of the whole vehicle according to the braking torque requirement;
according to the evaluation result of the energy recovery capability, performing corresponding operation.

6. The brake control method according to claim **5,** it is **characterized in that**, the step of according to the evaluation result of the energy recovery capability, performing corresponding operation, comprises:
executing the step of performing first torque arbitration and determining the target electric braking torque based on the braking torque requirement, if the evaluation result of the energy recovery capability indicates that the energy recovery capability meets a preset condition;
exiting the single-pedal mode, and adopting hydraulic-braking-compensation, and displaying a second prompt information, if the evaluation result of the energy recovery capability is that the energy recovery capability does not meet the preset condition.

7. The brake control method according to claim 1, it is **characterized in that**, the brake control method comprises:
during braking in the single-pedal mode, if acquiring the voltage signal of the brake pedal, acquiring the corresponding target hydraulic braking torque according to the voltage signal of the brake pedal, and entering a cooperative energy recovery mode, wherein in the cooperative energy recovery mode, the target braking torque is the sum of the target electric braking torque and the target hydraulic braking torque;
converting the target hydraulic braking torque in the target braking torque to a corresponding target electric braking torque;
if the target braking torque is less than or equal to the motor torque limit value, applying an electric braking;
if the target braking torque is greater than the motor torque limit value, adopting the combination of electric braking and hydraulic-braking-compensation to make brake.

8. The brake control method according to claim **1,** it is **characterized in that**, the brake control method further comprises:
during braking in the single-pedal mode, if obtaining a trigger response signal of an electronic stability control system, exiting the single-pedal mode, entering the electronic-stability-control-system-working mode, and displaying a third prompt information.

9. The brake control method according to claim **1,** it is **characterized in that**, after the step of according to the relation between the target electric braking torque and the motor torque limit value and/or the motor state, adopting correspondent brake mode to make brake, the brake control method comprises: acquiring the speed of the whole vehicle; and if the speed is lower than a preset value and a power-off signal of the whole vehicle is acquired, triggering an electronic-parking mode.

10. The brake control method according to claim **4** or **6,** it is **characterized in that**, the step of adopting hydraulic-braking-compensation, comprises:
performing a second torque arbitration and determining a target hydraulic braking torque based on the braking torque requirement;
adopting hydraulic-braking-compensation based on the target hydraulic braking torque.

11. A brake control device, it is characterized that, the brake control device comprises a battery energy control module, a motor control module and a whole vehicle dynamic domain manager;
the battery energy control module respectively connected with the motor control module and the whole vehicle dynamic domain manager, and configured to acquire voltage signal of an accelerator pedal and the corresponding voltage change characteristic in a single-pedal mode, and after calculate braking torque requirement according to the voltage signal and the corresponding voltage change characteristic, perform a first torque arbitration and determine a target electric braking torque according to the braking torque requirement, and output the first control signal according to the relation between the target electric braking torque and a motor torque limit value and/or motor state;
the motor control module and/or the whole vehicle dynamic domain manager receiving the first control signal and performing braking operation in a corresponding braking mode according to the first control signal.

12. The brake control device according to claim **11,** it is characterized that, the brake control device further comprises a brake assist module;
the battery energy control module also configured to evaluate the energy recovery capability of the whole vehicle according to the braking torque requirement, and output an evaluation result;
the whole vehicle dynamic domain manager receiving the evaluation result, performing a second torque arbitration and determining a target hydraulic braking torque according to the braking torque requirement, when the energy recovery capability does not meet a preset condition and/or the motor is in a first abnormal operating state, and performing hydraulic-braking-compensation operation or outputting a second control signal according to the target hydraulic braking torque;
the brake assist module connected to the whole vehicle dynamic domain manager, and receiving the second control signal, and performing hydraulic-braking-compensation operation according to the second control signal.

13. An electric vehicle, it is characterized that, the electric vehicle comprises a brake control device according to any one of claims **11-12.**
